# EUROPEAN PATENT APPLICATION

(11) **EP 4 836 394 A1**
(43) Date of publication of application: **04.11.2026**
(21) Application number: 26174735.6
(22) Date of filing: 27.04.2026
(51) Int. Cl.: H04N 1/44, G06F 21/31, H04N 1/00

(54) **IMAGE READING APPARATUS, CONTROL METHOD THEREFOR, SYSTEM, AND COMPUTER PROGRAM**

(30) Priority: 30.04.2025 JP 2025075695
(71) Applicant: Canon Kabushiki Kaisha, Tokyo 146-8501 (JP)
(72) Inventor: HOSAKA, Anna, Tokyo (JP)
(74) Representative: WESER & Kollegen Patentanwälte PartmbB

(57) **Abstract**

An image reading apparatus accepts a user operation for designating an authentication scheme to be used when scan data is uploaded to a storage service via a cloud scan system, and transmits a request designating a predetermined authentication scheme to the cloud scan system in accordance with the user operation. The predetermined authentication scheme is an authentication scheme in which the cloud scan system executes processing for user authentication with respect to an account that is identified at a time of reception of the scan data from the apparatus, in the cloud scan system. The apparatus transmits, to the cloud scan system, the scan data, an access token already issued with respect to the apparatus, and an identifier capable of identifying the account in the cloud scan system, in accordance with a setting of the predetermined authentication scheme.

## Description

### TECHNICAL FIELD

The present disclosure relates to an image reading apparatus, a control method therefor, a system, and a computer program.

### BACKGROUND

In recent years, a cloud scan service is known in which scan data generated by a scan function of an image reading apparatus, such as a multifunction peripheral (MFP) and a scanner, is uploaded to a cloud storage. User authentication is performed when the cloud scan service is used. Accounts of a cloud service are mainly configured to be associated with individuals, and there are also cases where a plurality of services are used differently. In view of this, Japanese Patent Laid-Open No. 2018-92564 improves convenience by registering pieces of account information of users of a cloud service with a device.

### SUMMARY

For example, as an authentication scheme for user authentication in the aforementioned cloud scan service, there is an authentication scheme that performs user authentication based on authentication information (e.g., an account name and a password) input on an image reading apparatus. In this authentication scheme, there is concern that the level of security is reduced due to the authentication information used in user authentication remaining in the image reading apparatus. For this reason, there are cases where an authentication scheme in which user authentication is performed on an authentication site without requiring the input of the authentication information on the image reading apparatus is used. However, if there is an inconsistency in settings of the authentication scheme between the image reading apparatus and the cloud scan service (cloud scan system), then there is a possibility that the level of security is reduced.

The present disclosure provides a technique to prevent the occurrence of an inconsistency in a setting of an authentication scheme between an image reading apparatus and a cloud scan service (cloud scan system) when a change is made to a setting of the authentication scheme.

The present disclosure in its first aspect provides an image reading apparatus as specified in claim 1. Optional features are specified in claims 2 to 9.

The present disclosure in its second aspect provides a control method for an image reading apparatus as specified in claim 10.

The present disclosure in its third aspect provides a program as specified in claim 11.

The present disclosure in its fourth aspect provides a system as specified in claim 12.

According to the present disclosure, it is possible to prevent the occurrence of an inconsistency in settings of the authentication scheme between the image reading apparatus and the cloud scan service (cloud scan system) caused by a change in settings of the authentication scheme.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 shows an exemplary configuration of a network.
Fig. 2 is a block diagram showing an exemplary hardware configuration of an image reading apparatus (MFP).
Fig. 3 shows an example of a UI screen of a cloud portal.
Fig. 4 is a sequence diagram showing an example of processing for MFP registration with a cloud scan system.
Fig. 5 is a sequence diagram showing an example of processing for executing a cloud scan.
Fig. 6 is a sequence diagram showing an example of processing for switching an authentication scheme.
Fig. 7A shows examples of UI screens displayed on the MFP.
Fig. 7B shows examples of UI screens displayed on the MFP.
Fig. 8 is a sequence diagram showing an example of processing for executing a cloud scan.
Fig. 9 is a flowchart showing an example of a procedure for initial settings of an authentication scheme on the MFP.
Fig. 10 is a flowchart showing an example of a procedure for switching an authentication scheme on the MFP.
Fig. 11 shows examples of UI screens for switching an authentication scheme, which are displayed on the MFP.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

In the following embodiment, a multifunction peripheral (MFP) will be described as an example of an image reading apparatus of the present disclosure. Note that the image reading apparatus may be any of, for example, a scanner (scanner apparatus), a copier, a multifunction peripheral (MFP), and a facsimile apparatus.

### <Authentication Schemes of Cloud Scan Service>

First, a description will be given of authentication schemes for user authentication in a cloud scan service (cloud scan system) that are expected in the embodiment of the present disclosure.

A first authentication scheme is an authentication scheme in which an authentication service of the cloud scan service that has received authentication information, such as user identification information (an account name) and a password, input by a user on an image processing apparatus, such as an MFP and a scanner, executes authentication processing.

A second authentication scheme is an authentication scheme that does not require the input of authentication information on the image processing apparatus. In this authentication scheme, first, the cloud scan service to which scan data has been uploaded from the image processing apparatus distributes a URL for authentication to, for example, an E-mail address of a user who has issued an instruction for the upload. The user accesses this URL for authentication from a terminal used to input authentication information (a user terminal), and performs user authentication on an authentication site indicated by this URL. In accordance with success in the user authentication on the authentication site, the cloud scan service executes processing for the authenticated user with respect to the scan data that was uploaded from the image processing apparatus earlier. Hereinafter, this second authentication scheme may be referred to as "later authentication".

The aforementioned second authentication scheme ("later authentication") is designed to alleviate anxiety that authentication information (login information) that was input by the user and used in the user authentication is stored inside the shared MFP arranged in a coworking space and the like. There may be cases where a service provider wishes to adopt the second authentication scheme ("later authentication"), which is a user authentication scheme that is more secure than the first authentication scheme, on the MFP. However, in a case where appropriate settings have not been configured on the MFP, there is a possibility of the occurrence of an inconsistency in settings related to the authentication schemes between the MFP (image reading apparatus) and the cloud scan service. In view of this, the present embodiment will be described in relation to a mechanism for preventing the occurrence of such an inconsistency on an MFP that uses a cloud scan system.

### <Network Configuration>

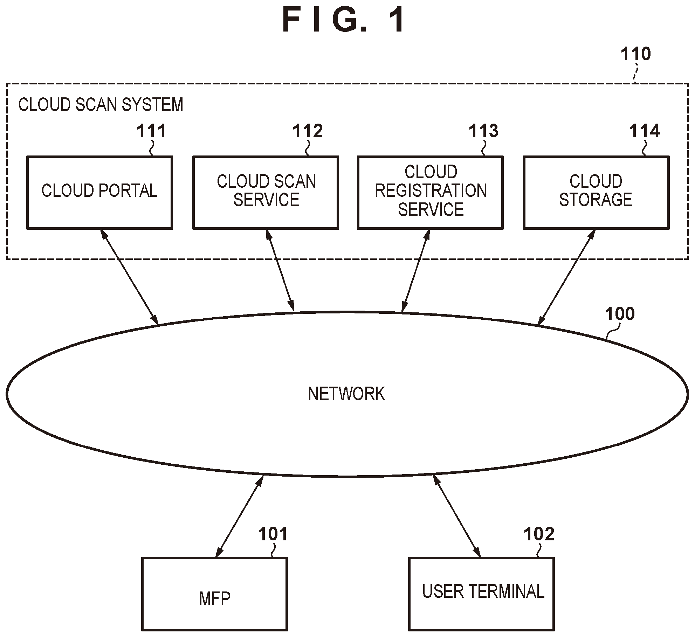

Fig. 1 shows an exemplary configuration of a network according to the embodiment of the present disclosure. A cloud scan system 110 includes a cloud portal 111, a cloud scan service 112, a cloud registration service 113, and a cloud storage 114 that are each connected to a network 100. In the present embodiment, the cloud scan system 110 (cloud scan service 112) is an example of a cloud scan system (cloud scan service) for uploading scan data to a cloud storage.

The network 100 includes communication networks such as the Internet, a wide area network (WAN), and a local area network (LAN). Also, the network 100 may include a mobile network that supports mobile communication standards such as long-term evolution (LTE) and fifth-generation (5G) New Radio (NR).

An MFP 101 is a multifunction peripheral that has a plurality of functions, such as a print function, a scan function (reading function), and a copy function. In the present embodiment, the MFP 101 is an example of an image reading apparatus including a reading unit that reads an image formed on a sheet to generate image data. Note that the MFP 101 may be referred to as an image processing apparatus, an image forming apparatus, an information processing apparatus, a scanner apparatus, or the like. A user terminal 102 is a terminal apparatus, such as a smartphone or a PC, held by a user who uses the MFP 101. The MFP 101 and the user terminal 102 can communicate with the cloud scan system 110 (cloud scan service 112) via the network 100.

The cloud portal 111 is a management portal that executes authentication processing for cloud accounts for using the cloud storage 114. The user accesses the cloud portal 111 via the user terminal 102, and performs an authentication operation on a Web site (authentication site) provided by the cloud portal 111.

As an example, the cloud scan service 112 is a server that provides, for instance, a Universal Print service provided by Microsoft Corporation and provides scan solutions. The cloud scan service 112 may provide print solutions in addition to scan solutions. The cloud scan service 112 has a function of obtaining image data (e.g., image data generated by the scan function) from the MFP 101. The cloud scan service 112 includes a device storage for temporarily storing image data that is to be transferred to a storage server, such as the cloud storage 114.

The cloud registration service 113 is configured to execute device (MFP) registration processing that is required to use the cloud portal 111, the cloud scan service 112, and the cloud storage 114.

The cloud storage 114 is a storage service that can be used by the user who uses the cloud scan service 112 through public or private account registration. The user can use the cloud storage 114 by performing, for example, authentication of an account (cloud account). The cloud storage 114 can be a storage server that provides, for instance, OneDrive of Microsoft Corporation or Google Drive of Google LLC, as a specific example. Image data transferred from the cloud scan service 112 is stored in the cloud storage 114.

### <Apparatus Configuration>

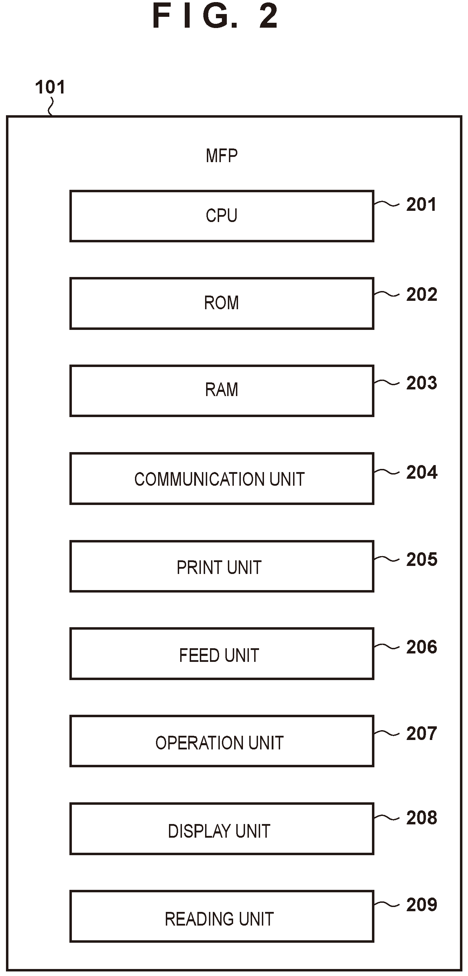

Fig. 2 is a block diagram showing an example of a schematic hardware configuration of the MFP 101. As shown in Fig. 2, the MFP 101 includes a CPU 201, a ROM 202, a RAM 203, a communication unit 204, a print unit 205, a feed unit 206, an operation unit 207, a display unit 208, and a reading unit (generation unit) 209.

The CPU 201 controls the entire apparatus. The CPU 201 reads out control programs stored in the ROM 202 to the RAM 203 and executes the control programs; as a result, various types of functions that can be executed by the MFP 101 are realized. The communication unit 204 includes a communication module, connects between the MFP 101 and other devices or recording apparatuses, and exchanges image data with these apparatuses.

The print unit 205 executes an operation of forming (printing) an image on a sheet fed from the feed unit 206 based on image data received from an external apparatus, or on image data generated by the reading unit 209. The feed unit 206, on which sheets and the like are stacked, supplies these sheets to the print unit 205. The operation unit 207 includes input devices such as buttons and a keyboard. The user can input various types of commands to the MFP 101 by operating the operation unit 207. Also, the operation unit 207 may include a read device that can read information of an IC card.

The display unit 208 includes a display, and displays various types of information for the user. Note that the display unit 208 may be, for example, a touch panel display, or may be configured integrally with the operation unit 207. The reading unit 209 includes a color scanner of, for example, a CCD scheme or a CIS scheme, and reads an image formed on a sheet to generate image data. In the present embodiment, the reading unit 209 is an example of a generation unit that generates scan data (image data) by reading an image formed on a sheet.

Next, an exemplary hardware configuration of the apparatuses other than the MFP 101 will be described. The cloud portal 111, the cloud scan service 112, the cloud registration service 113, and the cloud storage 114 are computers, for example. Each apparatus include: for example, a processor like a CPU; a primary storage like a RAM or a ROM; an secondary storage like an EPROM, a hard disk drive, or a removable medium; an input device; and a communication module. Note that the removable medium may be, for example, a USB memory or a disc recording medium like a CD or a DVD. An operating system (OS), various types of programs, various types of tables, and the like are stored in the secondary storage. Programs stored in the secondary storage are loaded to a working area of the primary storage, and each constituent and the like are controlled through the execution of the programs; as a result, each of the later-described functions that match predetermined purposes can be realized.

Furthermore, as stated earlier, the user terminal 102 is an electronic device, such as a smartphone or a PC, owned by the user. The user terminal 102 includes: for example, a processor like a CPU; a primary storage like a RAM or a ROM; an secondary storage like an EPROM, a hard disk drive, or a removable medium; an input device; a communication module; and a display device. Note that the removable medium may be, for example, a USB memory or a disc recording medium like a CD or a DVD. An operating system (OS), various types of programs, various types of tables, and the like are stored in the secondary storage. Programs stored in the secondary storage are loaded to a working area of the primary storage, and each constituent and the like are controlled through the execution of the programs; as a result, each of the later-described functions that match predetermined purposes can be realized.

### <Example of Setting Screen of Cloud Scan Service>

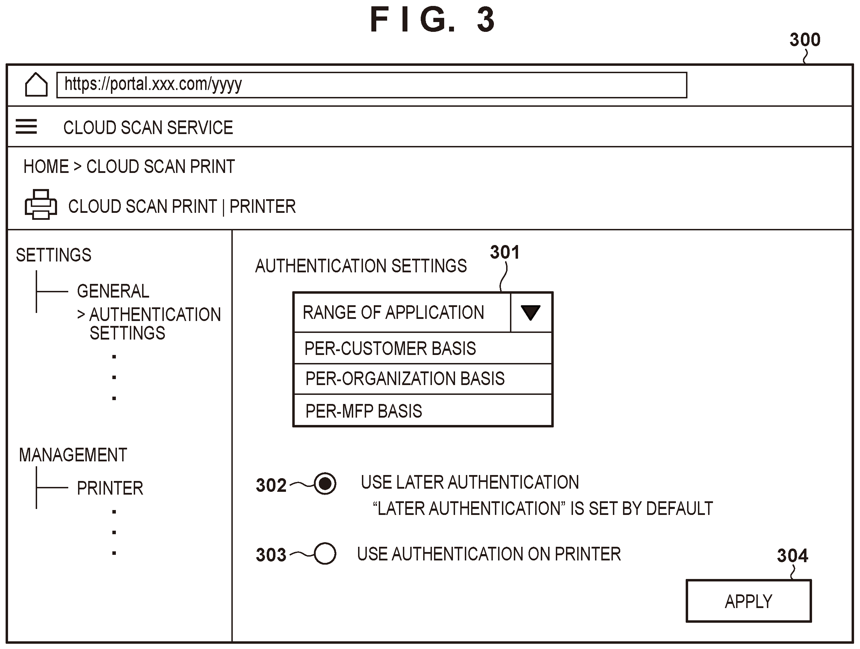

Fig. 3 shows a UI screen 300 as an example of a UI screen of the cloud portal 111. The UI screen 300 is a setting screen for configuring settings of an authentication scheme of the cloud scan service 112 with respect to the cloud portal 111, and is displayed as a WebUI screen on a display unit of the user terminal 102. A WebUI client (e.g., a Web browser) of the user terminal 102 accesses a WebUI of the cloud portal 111 via the network 100; as a result, the WebUI screen is provided to and displayed on the user terminal 102 by this WebUI.

The UI screen 300 is configured as a setting screen for setting an authentication scheme of the cloud scan service 112 with respect to the cloud portal 111. Although the UI screen 300 is configured in such a manner that "authentication settings" are arranged in "general" among setting items that can be set, the arrangement of "authentication settings" is not limited to this. The example of Fig. 3 shows a state where the user has selected "authentication settings" on the UI screen 300.

In the example of Fig. 3, the UI screen 300 includes a drop-down list 301, radio buttons 302 and 303, and a button 304. The drop-down list 301 is used to select the range of application of settings of an authentication scheme (authentication settings) configured on the UI screen 300. For example, the drop-down list 301 is configured so that a per-customer basis, a per-organization basis, or a per-MFP basis can be selected as the range of application of authentication settings. For example, the same authentication settings can be applied collectively to all MFPs that have already been registered with the cloud scan service 112 on a per-client basis or a per-organization basis in accordance with the needs or security policy of a client. Furthermore, settings can be applied differently among different MFPs by applying authentication settings on a per-MFP basis.

The radio buttons 302 and 303 are configured to be exclusively selectable. The radio button 302 is used to select "later authentication", which is the second authentication scheme. "Later authentication" (the second authentication scheme) is an authentication scheme whereby, when using the cloud scan service 112, user authentication is performed using a URL for user authentication distributed from the cloud scan service 112 without performing user authentication on the MFP 101. The radio button 303 is used to select "authentication on the MFP (printer)", which is the first authentication scheme. "Authentication on MFP" (the first authentication scheme) is an authentication scheme whereby user authentication is performed on the MFP 101. As an example, the UI screen 300 is configured so that the radio button 302 is selected by default.

In a case where the radio button 302 or 303 has been selected on the UI screen 300, settings related to relevant setting items may also be configured in coordination with the selection. For example, in a case where "authentication on MFP" is set by the selection of the radio button 303, a setting for enabling a cookie function, which is one of the functions that Web browsers have, may also be configured in coordination with the selection. The cookie function is a mechanism in which information that has been input by the user on a Web browser screen is stored for a certain time period, and the stored information is reused at the time of the next input. Enabling the cookie function makes it possible to, for example, skip the input of authentication information for using an external cloud storage service (e.g., the cloud storage 114) the second time onward.

The button 304 is used to issue an instruction for applying (reflecting) the settings that were configured using the UI screen 300 to the cloud scan service 112. The user can issue an instruction for applying the settings to the cloud scan service 112 by pressing the button 304 after configuring the settings (initial settings or changes in the settings) on the UI screen 300. Upon detecting pressing of the button 304 on the user terminal 102 via the WebUI, the cloud portal 111 stores the settings on the UI screen 300 as user settings in a data server (not shown) inside the cloud scan system 110.

### <Sequence at Time of Device Registration>

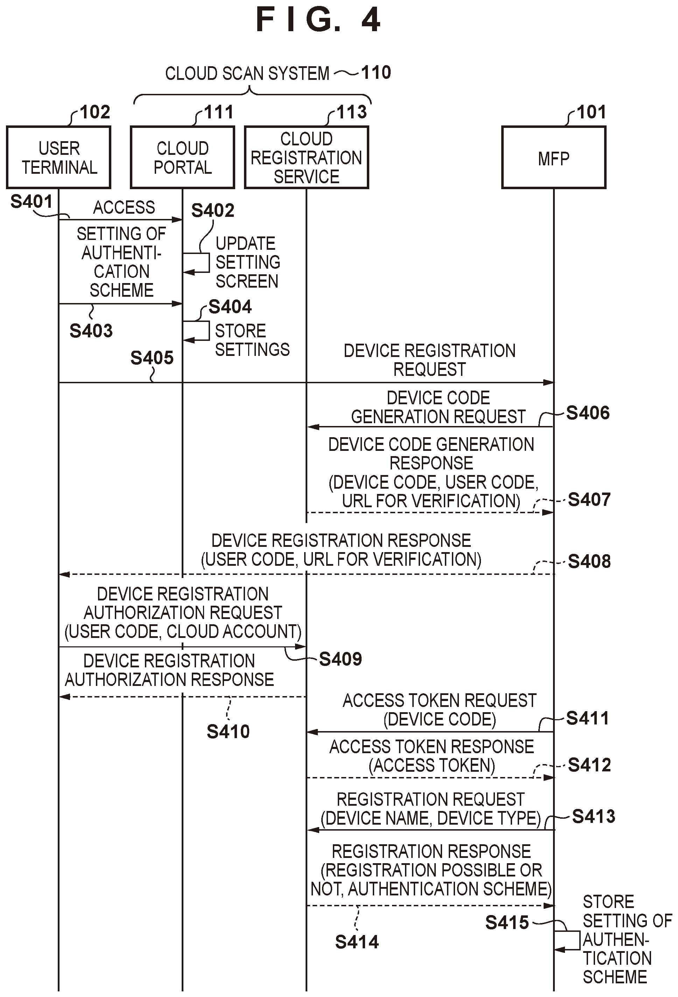

Fig. 4 shows an example of a sequence of processing for registering a device that uses the cloud scan system 110 (cloud scan service 112) with the cloud scan system 110 (cloud scan service 112). Note that each process included in the sequence of Fig. 4 is realized in each apparatus by the CPU in each apparatus reading out programs stored in the ROM and executing the programs.

In the present embodiment, the MFP 101 supports a cloud scan function and a WebUI function for operating the MFP 101. The cloud scan function is a function of executing a scan job and uploading generated scan data (image data) to the cloud scan service 112. The scan data uploaded to the cloud scan service 112 is transferred to and stored in an external cloud storage service (e.g., the cloud storage 114). The user obtains the scan data from the cloud storage 114. The WebUI function is a function of generating a UI screen and posting the UI screen in the network 100 (providing the UI screen to an external apparatus via the network 100).

The user terminal 102 supports a cloud scan client function and a WebUI client function (e.g., a Web browser) for operating a WebUl. The cloud scan client function is a function of obtaining image data stored in the cloud storage 114. The cloud registration service 113 is a service provided on the Internet, and executes processing for registering a device (MFP 101) that uses the cloud scan system 110.

In step S401, the user terminal 102 accesses the cloud portal 111 in accordance with a user operation on the WebUI screen displayed by a WebUI client (in the present example, a Web browser). The WebUI screen is a UI screen provided by a WebUI of the cloud portal 111. In response to the access from the user terminal 102, the cloud portal 111 displays a setting screen of an authentication scheme (in the present example, the UI screen 300 shown in Fig. 3) as the WebUI screen on the user terminal 102 in step S402.

In step S403, the cloud portal 111 accepts settings of an authentication scheme of the cloud scan service 112 based on a user operation on the setting screen (UI screen 300) displayed on the user terminal 102. The cloud portal 111 accepts a selection of "later authentication" (the second authentication scheme) or "authentication on MFP" (the first authentication scheme) based on an operation of selecting the radio button 302 or 303 on the UI screen 300. In response to pressing of the button 304 on the UI screen 300, the cloud portal 111 sets the selected authentication scheme as the authentication scheme of the cloud scan service 112.

In step S404, the cloud portal 111 stores setting information of the authentication scheme in a management server (not shown) inside the cloud scan system 110. Note that the setting information of the authentication scheme may be stored in a storage (not shown) of the cloud portal 111. Note that default settings of the authentication scheme (e.g., the authentication scheme corresponding to the radio button 302 as described above using Fig. 3) have been configured in advance in the cloud scan system 110, and setting information thereof is stored in the management server inside the cloud scan system 110. Therefore, for example, in a case where the range of application has been set to the per-MFP basis in the drop-down list 301 on the UI screen 300, processing of steps S401 to S404 may be skipped. In this case, regarding the settings of the authentication scheme, the default settings (initial settings) are applied to the MFP targeted for device registration.

In step S405, using the WebUI client of the user terminal 102, the user performs an operation of transmitting a device registration request (MFP registration request) for registering the MFP 101 with the cloud scan service 112 to the MFP 101. The user terminal 102 transmits the device registration request to the MFP 101 in accordance with a user operation on the WebUI screen provided by the MFP 101.

In step S406, upon receiving the device registration request from the user terminal 102, the MFP 101 executes processing in accordance with this request. Specifically, the MFP 101 transmits a device code generation request to the cloud registration service 113. Upon receiving the device code generation request from the MFP 101, the cloud registration service 113 generates a device code, a user code, and a URL for verification in accordance with this request. The device code is a code that is issued to the MFP 101 targeted for device registration. The user code is a code that is issued to the user who has requested device registration. The URL for verification is used to provide the user with a WebUI screen that is intended for the user to input information necessary for device registration. In step S407, the cloud registration service 113 transmits a device code generation response, which includes the generated device code, user code, and URL for verification, to the MFP 101 as a response to the device code generation request.

In step S408, upon receiving the device code generation response, the MFP 101 transmits a device registration response as a response to the device registration request to the user terminal 102. The device registration response includes the user code and the URL for verification generated by the cloud registration service 113.

In step S409, upon receiving the MFP registration response from the MFP 101, the user terminal 102 displays the user code and the URL for verification on a screen of the WebUI client. The user terminal 102 accesses the URL for verification in accordance with a user operation on the displayed screen. The user inputs an ID for identification of a cloud account and the user code included in the device registration response on the screen of the WebUI client that has been displayed on the user terminal 102 as a result of the access to the URL for verification. Consequently, the user terminal 102 transmits, to the cloud registration service 113, a device registration authorization request including the user code and the ID for identification of the cloud account, which were input by the user.

Upon receiving the device registration authorization request from the user terminal 102, the cloud registration service 113 associates an administrator of the MFP 101 targeted for registration with the cloud account, and manages the administrator as authorized for registration of the MFP 101. The MFP 101 targeted for registration is identified based on the user code included in the device registration authorization request. Also, the cloud account is identified based on the ID for identification included in the device registration authorization request. Thereafter, in step S410, the cloud registration service 113 transmits a device registration authorization response to the user terminal 102.

Here, a user who has authority regarding changes in settings related to processing for cloud registration and security via the MFP 101 will be referred to as an administrator (administrating user) of the MFP 101. The authority of the administrator of the MFP 101 is authority that is given to the user in accordance with success in authentication with respect to the MFP 101 itself, or in authentication with respect to an authentication system inside a network environment in which the MFP 101 is installed. This authentication is different from authentication of the cloud scan service or other cloud services.

In step S411, the MFP 101 transmits an access token request for requesting the issuance of an access token to the cloud registration service 113. The access token request includes the device code that was generated by the cloud registration service 113 and provided from the cloud registration service 113 to the MFP 101 in step S407. Using this device code, the cloud registration service 113 identifies the MFP 101 targeted for registration. Upon receiving the access token request from the MFP 101, the cloud registration service 113 generates an access token in accordance with the received request. This access token certifies that the execution of registration processing was approved, and is used in registration processing to be executed from then on. The access token is an approval token for a device, and is an approval token for accessing the cloud scan system 110 (cloud scan service 112). For example, the access token is an approval token for storing scan data (image data) in the device storage of the cloud scan service 112. The access token is managed inside the MFP 101. Upon generating the access token, the cloud registration service 113 transmits an access token response including the generated access token to the MFP 101 in step S412.

In this way, the MFP 101 obtains the access token from the cloud scan system 110 (cloud registration service 113) by requesting the cloud scan system 110 (cloud registration service 113) to issue the access token before transmitting a registration request. Thereafter, in step S413, the MFP 101 transmits a registration request for requesting registration of the MFP 101 with the cloud scan system 110 (cloud scan service 112) to the cloud registration service 113. The registration request includes information indicating a device name (MFP name) and a device type. The device name is a device name set for the MFP 101. Also, the access token that was generated by the cloud registration service 113 and obtained from the cloud registration service through the access token response is added to an HTTP header of the registration request.

Upon receiving the registration request from the MFP 101, the cloud registration service 113 determines whether the access token added to the HTTP header of this registration request is the access token transmitted to the MFP 101 through the access token response (step S412). In this way, the cloud registration service 113 determines whether the registration request has been approved (whether registration processing that complies with the registration request has been approved). In a case where the access token added to the HTTP header of the registration request matches the access token transmitted to the MFP 101 through the access token response, the cloud registration service 113 determines that this registration request has been approved.

Upon determining that the received registration request is the approved registration request, the cloud registration service 113 transmits a registration response to the MFP 101 in step S414. The registration response includes the result of the aforementioned determination about whether registration is possible, and the setting information of the authentication scheme that was set in step S403. Here, the cloud portal 111 and the cloud registration service 113 are encompassed in the cloud scan system 110, and are configured to be capable of accessing the setting information stored in the management server (not shown) inside the cloud scan system 110. Therefore, the cloud registration service 113 obtains the setting information from the management server, includes the obtained setting information in the registration response, transmits this registration response to the MFP 101, and starts processing for registering the MFP 101. Note that in a case where settings of the authentication scheme have not been configured in steps S401 to S404 (i.e., in a case where the user has not configured settings of the authentication scheme in the cloud scan system 110), setting information of the initial settings of the authentication scheme (the default authentication scheme) that was set in advance in the cloud scan service 112 is included in the registration response.

Upon receiving the registration response from the cloud registration service 113, the MFP 101 stores the setting information of the authentication scheme included in the received registration response in the RAM 203, thereby applying the settings of the authentication scheme to the MFP 101, in step S415. In a case where the setting information of the initial settings has been received as the setting information of the authentication scheme, the MFP 101 stores (applies) these initial settings.

### <Sequence at Time of Execution of Cloud Scan>

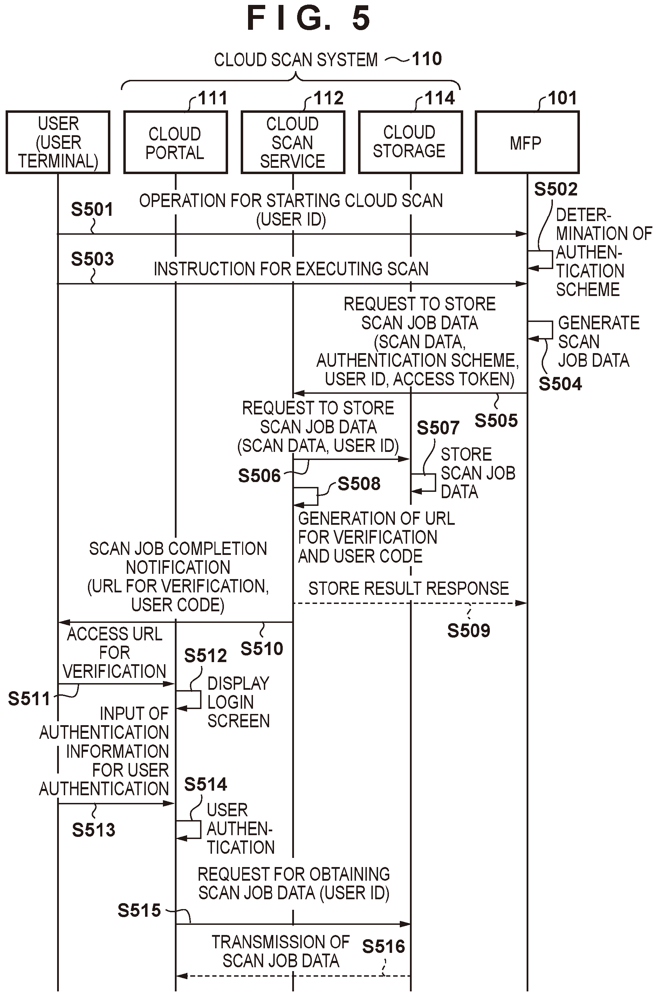

Fig. 5 shows an example of a sequence of processing for executing a cloud scan with use of the cloud scan system 110. Note that each process included in the sequence of Fig. 5 is realized in each apparatus by the CPU in each apparatus reading out programs stored in the ROM and executing the programs. In the present example, it is assumed that "the later authentication scheme" (second authentication scheme) has been set as the authentication scheme of the cloud scan service 112 at the start of the present sequence.

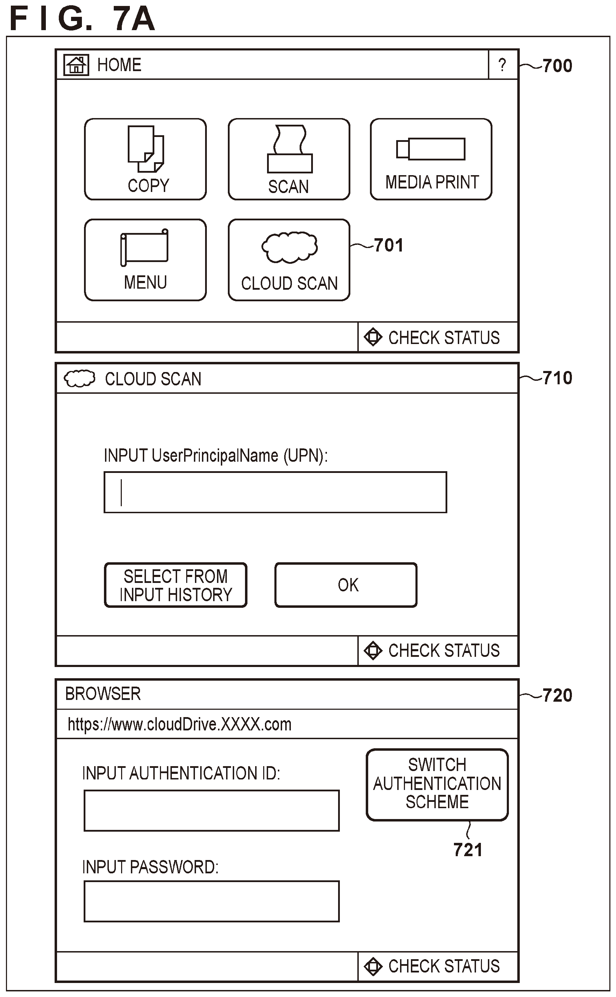

In step S501, the user performs an operation for starting a cloud scan with use of a UI screen displayed on the display unit 208 of the MFP 101. With this user operation, the MFP 101 accepts the input of a user ID for identifying the user who is to use the cloud scan service 112. As an example, a later-described UI screen 700 (Fig. 7A) is displayed on the display unit 208 of the MFP 101. When a cloud scan button 701 has been pressed on the UI screen 700, the MFP 101 causes the display screen of the display unit 208 to transition from the UI screen 700 to a UI screen 710 (Fig. 7A). Using the UI screen 710, the user inputs a user ID for identifying the user who is to use the cloud scan service 112. This user ID may be associated with a login ID for logging into the MFP 101. In this case, when user authentication has been performed for the user's login to the MFP 101, the MFP 101 may obtain the user ID associated with the login ID without requesting the user ID to be input.

The user ID input by the user in step S501 is a cloud authentication identifier for checking user authentication registration of the cloud service (cloud scan service). For example, attribute information called a UserPrincipalName (UPN), which is based on the Internet standard RFC 822, is used as this cloud authentication identifier. The UPN is the user's login name in the Internet format. In the present embodiment, the aforementioned user ID is an example of an identifier that can identify authentication registration of the user in the cloud scan system 110.

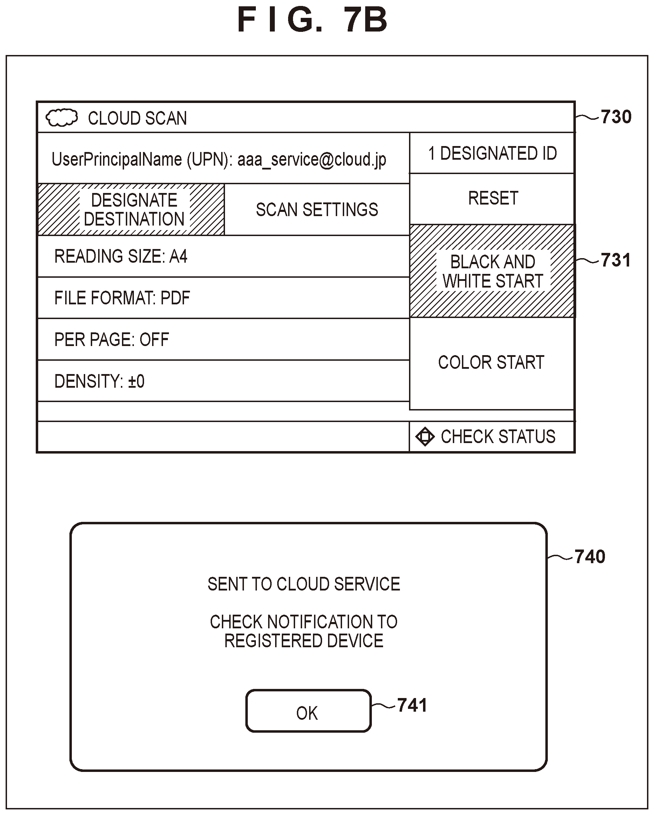

In step S502, the MFP 101 determines the authentication scheme that has already been set based on settings of the authentication scheme stored in step S415. Here, in a case where the MFP 101 has determined that the authentication scheme that has already been set is "later authentication" (the second authentication scheme), it causes the display screen of the display unit 208 to transition from the UI screen 710 to a UI screen 730 (Fig. 7B) upon completion of user authentication of the cloud portal 111 based on the user ID that was input using the UI screen 710 (checking of user authentication registration of the cloud scan service).

On the other hand, in a case where the MFP 101 has determined that the authentication scheme that has already been set is "authentication on MFP" (the first authentication scheme), it causes the display screen of the display unit 208 to transition from the UI screen 710 to the UI screen 720 (Fig. 7A) upon completion of user authentication of the cloud portal 111 based on the user ID that was input using the UI screen 710. The MFP 101 causes the display screen of the display unit 208 to transition from the UI screen 720 to the UI screen 730 (Fig. 7B) upon completion of user authentication of the cloud service (cloud storage service) that is based on authentication information (login information) that was input using the UI screen 720.

In step S503, the user instructs the MFP 101 to execute a scan job by pressing an execution button 731 on the UI screen 730. The MFP 101 (CPU 201) executes the scan job upon accepting the instruction for executing the scan job from the user. Once the MFP 101 has started the execution of the scan job, it generates scan data (image data) by reading an image formed on a sheet with use of the reading unit 209, and stores the generated scan data in the RAM 203.

Upon completion of the execution of the scan job, in step S504, the MFP 101 generates scan job data for transmission to the cloud scan service 112 based on the executed scan job. The scan job data includes the user ID input in step S501, the scan data that was read out from the RAM 203, setting information of the authentication scheme, and an access token. This access token is an access token obtained in step S412 of Fig. 4 when the MFP 101 was registered with the cloud scan service 112. Note that an access token generally has a period of validity; there may be cases where, after an access token has been obtained, an access token with an updated period of validity is obtained from the cloud scan service 112. In such cases, the scan job data can include the access token with the updated period of validity.

In step S505, the MFP 101 transmits a request to store the scan job data to the cloud scan service 112. The request to store the scan job data includes the scan job data generated in step S504. That is to say, the scan job data includes the user ID input in step S501, the scan data that was read out from the RAM 203, the setting information of the authentication scheme, and the access token. In this way, in accordance with the settings of the authentication scheme, the MFP 101 (CPU 201) transmits the scan data to the cloud scan system 110 (cloud scan service 112) together with the access token and the user ID (an identifier that can identify authentication registration of the user in the cloud scan system 110).

Upon receiving the request to store the scan job data, the cloud scan service 112 verifies the access token included in the received scan job data. When the verification of the access token has succeeded, the cloud scan service 112 stores the scan job data (scan data) in the device storage of the cloud scan service 112. Thereafter, in step S506, the cloud scan service 112 transmits the request to store the scan job data to the cloud storage 114. This request to store includes the user ID and the scan data obtained from the request to store that was received from the MFP 101 in step S505.

Upon receiving the request to store the scan job data from the cloud scan service 112, the cloud storage 114 identified the user (related to the scan job) based on the user ID included in the received request to store in step S507. The cloud storage 114 stores the scan job data in the cloud storage 114 associated with the identified user.

Thereafter, in step S508, the cloud scan service 112 generates a URL for verification (a URL for authentication) for performing user authentication, and a user code unique to the user corresponding to the user ID. In step S509, the cloud scan service 112 transmits a store result response indicating the result of storage of the scan job data (scan data) in the cloud storage 114 to the MFP 101. Furthermore, in step S510, the cloud scan service 112 transmits a scan job completion notification to the user terminal 102. In this way, the user (user terminal 102) is provided with a notification indicating that the execution of the scan job has been completed and the scan data has been stored in the cloud storage 114 associated with the user. This scan job completion notification includes the URL for verification and the user code that were generated in step S508. In this way, after the scan data has been transmitted to the cloud scan system 110, the user who is identified based on the user ID is provided with information (the URL for verification) for accessing an authentication site (the cloud portal 111) so as to enable obtainment of this scan data.

Upon receiving the scan job completion notification, the user terminal 102 displays the user code and the URL for verification included in this scan job completion notification on a screen of the WebUI client. In step S511, the user terminal 102 accesses the URL for verification in accordance with a user operation on the displayed screen. As a result of accessing this URL for verification, a WebUI screen for user authentication (a login screen), which is provided by the cloud portal 111, is displayed on the user terminal 102 in step S512. That is to say, the cloud portal 111 causes the user terminal 102 to display the WebUI screen for user authentication (the login screen) via the WebUI.

In step S513, using the WebUI screen displayed on the user terminal 102, the user performs an operation of inputting authentication information for user authentication, such as the authentication information of the cloud account (the user ID (authentication ID), the password, and the like) and the user code that were registered, to the cloud portal 111. The cloud portal 111 obtains the authentication information input on the user terminal 102 via the WebUI. In step S514, the cloud portal 111 performs user authentication with use of the obtained authentication information.

Once the user authentication has succeeded, the cloud portal 111 transmits an obtainment request for obtaining the scan job data associated with the authenticated user to the cloud storage 114 in step S515. The request for obtaining the scan job data includes the user ID for identifying the authenticated user. Upon receiving the request for obtaining the scan job data, the cloud storage 114 identifies the scan job data associated with the user ID included in this request for obtainment among pieces of scan job data stored in a storage area. In step S516, the cloud storage 114 transmits the identified scan job data to the cloud portal 111. The user can import (download) the scan job data from the cloud portal 111 to the user terminal 102 by, for example, performing an operation on the WebUI screen of the cloud portal 111 displayed on the user terminal 102.

### <Sequence at Time of Switching of Authentication Scheme>

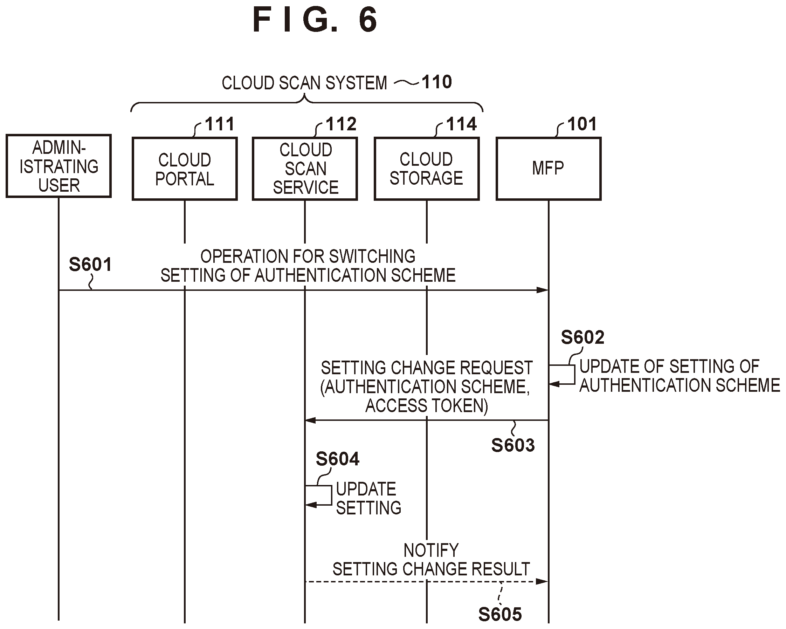

Fig. 6 shows an example of a sequence of processing for switching (changing) the authentication scheme of the cloud scan service 112. Note that each process included in the sequence of Fig. 6 is realized in each apparatus by the CPU in each apparatus reading out programs stored in the ROM and executing the programs.

The MFP 101 is registered with the cloud portal 111 through processing of the sequence of Fig. 4. At the time of registration of the MFP 101, the initial settings of the authentication scheme of the cloud scan service 112 are stored in the RAM 203 (step S415). On the MFP 101 of the present embodiment, the user who has authority to change settings related to security of the MFP 101, including the settings of the authentication scheme, is limited to the administrating user. Therefore, in the present sequence, the settings of the authentication scheme of the cloud scan service 112 are switched (changed) in accordance with an operation of the administrating user who has authority to change settings related to security.

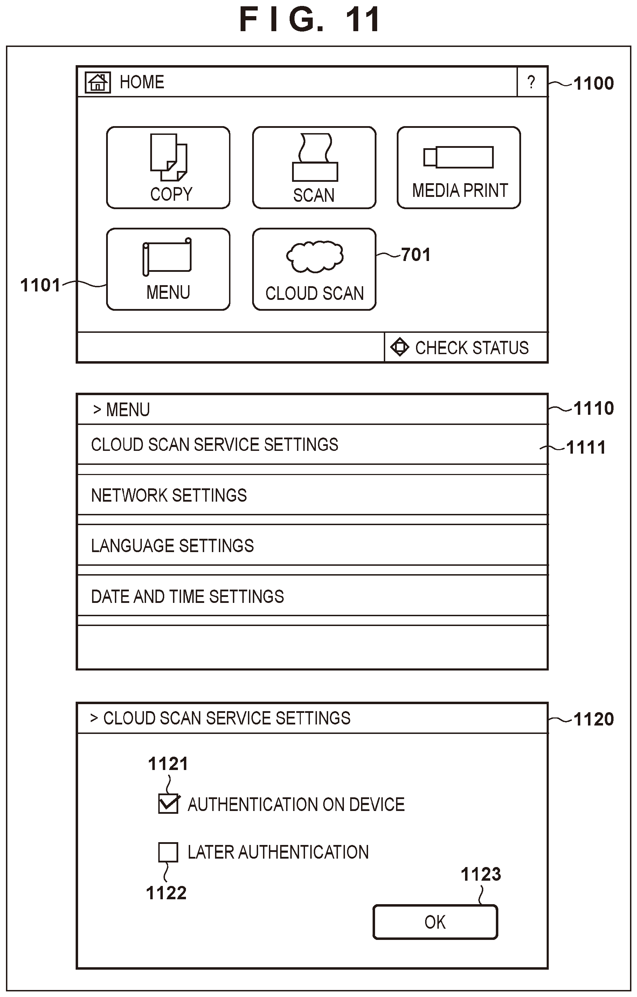

In step S601, the administrating user performs an operation for switching (changing) the settings of the authentication scheme of the cloud scan service 112 with use of the operation unit 207 and the display unit 208 of the MFP 101. In the present example, the administrating user can perform this operation with use of later-described UI screens 1100, 1110, and 1120 shown in Fig. 11.

Upon accepting the user operation for switching (changing) the settings of the authentication scheme of the cloud scan service 112 via the operation unit 207 and the display unit 208, the MFP 101 (CPU 201) updates the settings of the authentication scheme stored in the RAM 203 in step S602. Specifically, the CPU 201 updates the settings of the authentication scheme by updating the setting information stored in the RAM 203 with use of the setting information indicating the authentication scheme selected by the user.

Thereafter, in step S603, the MFP 101 (CPU 201) transmits, to the cloud scan service 112, a setting change request for requesting a change of settings of the authentication scheme on the cloud scan system 110 side in accordance with the aforementioned user operation. This setting change request includes the setting information of the authentication scheme after the update in step S602, and the access token obtained in step S412 of Fig. 4 when the MFP 101 was registered with the cloud scan service 112. Note that an access token generally has a period of validity; there may be cases where, after an access token has been obtained, an access token with an updated period of validity is obtained from the cloud scan service 112. In such cases, the setting change request can include the access token with the updated period of validity.

Upon receiving the setting change request from the MFP 101, the cloud scan service 112 executes processing for updating the settings of the authentication scheme in step S604. Specifically, the cloud scan service 112 identifies the MFP 101 that is a transmission source of the received setting change request by verifying the access token included in this setting change request. Once the verification of the access token (identification of the MFP 101) has succeeded, the cloud scan service 112 updates the setting information of the authentication scheme of the cloud scan service 112 with use of the setting information included in the setting change request with respect to the identified MFP 101. As stated earlier, the setting information of the authentication scheme is stored in the management server (not shown) included in the cloud scan system 110. Therefore, the setting information of the authentication scheme stored in this management server is updated by the cloud scan service 112.

Once the update of the setting information has been completed, the cloud scan service 112 notifies the MFP 101, which is the transmission source of the setting change request received in step S603, of a setting change response that includes information indicating a processing result (a setting change result) in step S605. In this way, in a case where the settings of the authentication scheme have been changed on the MFP 101 side, the settings of the authentication scheme are changed also on the cloud scan service 112 side as a result of a request made by the MFP 101 to the cloud scan service 112.

### <Examples of UI Screens for Cloud Scan Function>

Examples of UI screens (operation screens) for using the cloud scan function, which are displayed on the display unit 208 of the MFP 101, will be described with reference to Fig. 7A and Fig. 7B.

A UI screen 700 is a home screen of the MFP 101. The UI screen 700 includes buttons for selecting each function included in the MFP 101. A cloud scan button 701 of the UI screen 700 is displayed only in a case where settings of the authentication scheme of the cloud scan service 112 have been completed (processing of step S415 of Fig. 4 has been completed) on the MFP 101. The cloud scan button 701 is not displayed in a case where settings of the authentication scheme have not been completed. The user can use the cloud scan function of the MFP 101 by selecting (pressing) the cloud scan button 701.

When the cloud scan button 701 has been pressed on the UI screen 700, the CPU 201 displays a UI screen 710 on the display unit 208 in a case where the authentication scheme that has already been set is the second authentication scheme ("later authentication"). The UI screen 710 is used to input a user ID for identifying the user who is to use the cloud scan service 112. The UI screen 710 can be used to input a user ID in the aforementioned step S501 (Fig. 5). The user ID that was input via the UI screen 710 is used in user authentication of the cloud portal 111 (checking of user authentication registration). Upon completion of user authentication, the CPU 201 causes the display screen of the display unit 208 to transition from the UI screen 710 to the UI screen 730.

Furthermore, when the cloud scan button 701 has been pressed on the UI screen 700, the CPU 201 displays a UI screen 720 on the display unit 208 after the UI screen 710 is displayed in a case where the authentication scheme that has already been set is the first authentication scheme ("authentication on MFP"). The UI screen 720 is used to input authentication information (login information) for using an external cloud storage service (e.g., the cloud storage 114). User authentication based on the authentication information that was input using the UI screen 720 is performed to transmit scan data (image data) obtained through the execution of a scan job to the external cloud storage service via the cloud portal 111. Upon completion of user authentication, the CPU 201 causes the display screen of the display unit 208 to transition from the UI screen 720 to a UI screen 730.

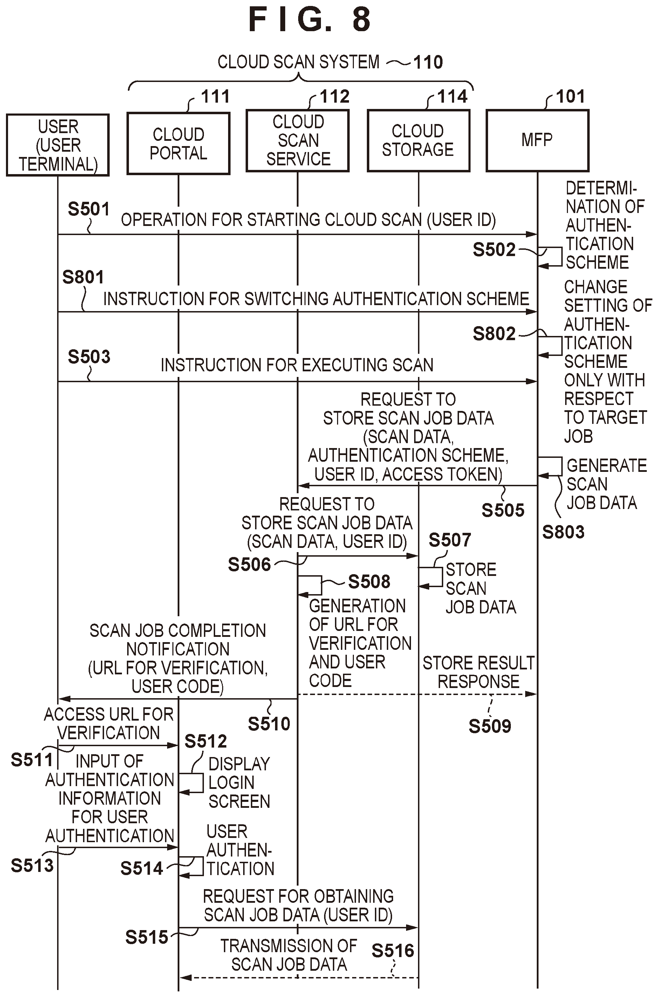

Note that a button 721 of the UI screen 720 is used to issue an instruction for switching the authentication scheme to be used only with respect to a job (scan job) to be executed, as shown in a later-described exemplary sequence of Fig. 8. In a case where the first authentication scheme ("authentication on MFP") is applied to the MFP 101, there is a possibility that the user feels anxiety about the storage of authentication information that has been input to use the external cloud storage service in the MFP 101. The MFP 101 of the present embodiment can be configured so that such a user can issue an instruction for temporarily switching from the first authentication scheme ("authentication on MFP") to the second authentication scheme ("later authentication") by pressing the button 721 of the UI screen 720.

The UI screen 730 is used to issue an instruction for executing the cloud scan service (scan job). On the UI screen 730, settings for scan processing (scan settings) can be configured; for example, settings of a reading size and the like of a scan image can be configured. The user can instruct the MFP 101 to execute the scan job by pressing an execution button 731. In response to pressing of the execution button 731, the CPU 201 starts the execution of the scan job in accordance with the input scan settings.

The CPU 201 displays a UI screen 740 on the display unit 208 after the execution of the scan job on the MFP 101 has been completed and the transmission of the scan data (image data) to the cloud service (cloud storage service), such as the cloud storage 114, has been completed. In the present example, the UI screen 740 is superimposed on the UI screen 730 when displayed. When the user has pressed a button 741 of the UI screen 740, the CPU 201 causes the display screen of the display unit 208 to return to the UI screen 700.

### <Sequence at Time of Execution of Cloud Scan That Accompanies Switching of Authentication Scheme>

Fig. 8 shows an example of a sequence of processing for executing a cloud scan with use of the cloud scan system 110. The present example differs from the example of Fig. 5 in that a user operation of switching the authentication scheme of the cloud scan service 112 is performed on the MFP 101 before the execution of a scan job is started. Below, processing that is the same as that of Fig. 5 is given the same reference signs as in Fig. 5, and a description thereof is omitted.

In a case where the authentication scheme that authenticates an external cloud storage service on the MFP 101 is used, there is concern that security is reduced because authentication information input by the user is stored in the MFP 101. For this reason, in a case where "authentication on MFP" (the first authentication scheme) is set in the MFP 101, there is a possibility that the user wishes to temporarily change the authentication scheme to "later authentication" (the second authentication scheme) at the time of execution of a scan job. In the present example, on the MFP 101 in a state where "authentication on MFP" (the first authentication scheme) is set therein, the authentication scheme is temporarily changed (switched) with respect to a scan job to be executed (a target job).

Similarly to the sequence of Fig. 5, processing of steps S501 and S502 is executed. In step S502, as it is determined that the authentication scheme that has already been set is "authentication on MFP" (the first authentication scheme), the UI screen 710 and the UI screen 720 are displayed on the display unit 208, and a user operation is performed. In step S801, the MFP 101 (CPU 201) accepts an instruction for switching (changing) the authentication scheme to be used with respect to the scan job to be executed (target job) on the UI screen 720 displayed on the display unit 208. Specifically, an instruction for switching the authentication scheme to be used with respect to the scan job to be executed (target job) from the first authentication scheme ("authentication on MFP") to the second authentication scheme ("later authentication") is issued by selecting the button 721 of the UI screen 720.

When the user has issued an instruction for switching (changing) the authentication scheme, the MFP 101 changes the settings of the authentication scheme from the first authentication scheme ("authentication on MFP") to the second authentication scheme ("later authentication") in step S802. For example, the CPU 201 sets a flag indicating a change of the authentication scheme to be used with respect to the target job, and stores this flag in the RAM 203.

Thereafter, the MFP 101 (CPU 201) executes the scan job and stores generated scan data in the RAM 203 in step S503, similarly to the sequence of Fig. 5.

Upon completion of the execution of the scan job, the MFP 101 (CPU 201) generates scan job data for transmission to the cloud scan service 112 based on the executed scan job in step S803. The scan job data includes the user ID input in step S501, the scan data that was read out from the RAM 203, setting information of the authentication scheme, and an access token.

In a case where a value indicating a change of the authentication scheme is set in the flag held in the RAM 203, the MFP 101 (CPU 201) includes setting information indicating the second authentication scheme ("later authentication") in the scan job data. Consequently, the cloud scan service 112 applies the second authentication scheme as the authentication scheme for user authentication, and executes corresponding processing. Also, the access token is an access token obtained in step S412 of Fig. 4 when the MFP 101 was registered with the cloud scan service 112. Note that an access token generally has a period of validity; there may be cases where, after an access token has been obtained, an access token with an updated period of validity is obtained from the cloud scan service 112. In such cases, the scan job data can include the access token with the updated period of validity.

After the scan job data has been generated, the MFP 101 (CPU 201) transmits a request to store the scan job data to the cloud scan service 112 in step S505. Processing of step S505 onward is similar to that in the sequence of Fig. 5. After processing of step S509, the MFP 101 restores the settings of the authentication scheme in the MFP 101 to the original settings. This prevents the temporary change of the settings of the authentication scheme in the target job from influencing jobs to be executed from then on. That is to say, the occurrence of an inconsistency in the settings of the authentication scheme between the cloud scan service 112 and the MFP 101 is prevented.

Note that in step S802, a setting change request for changing the settings of the authentication scheme from the first authentication scheme to the second authentication scheme may be transmitted to the cloud scan service 112. In this case, after completion of processing of step S509, the MFP 101 transmits the setting change request for changing (restoring) the settings of the authentication scheme from the second authentication scheme to the first authentication scheme to the cloud scan service 112. This prevents the temporary change of the settings of the authentication scheme in the target job from influencing jobs to be executed from then on. That is to say, the occurrence of an inconsistency in the settings of the authentication scheme between the cloud scan service 112 and the MFP 101 is prevented.

### <Processing Procedure (Initial Settings of Authentication Scheme)>

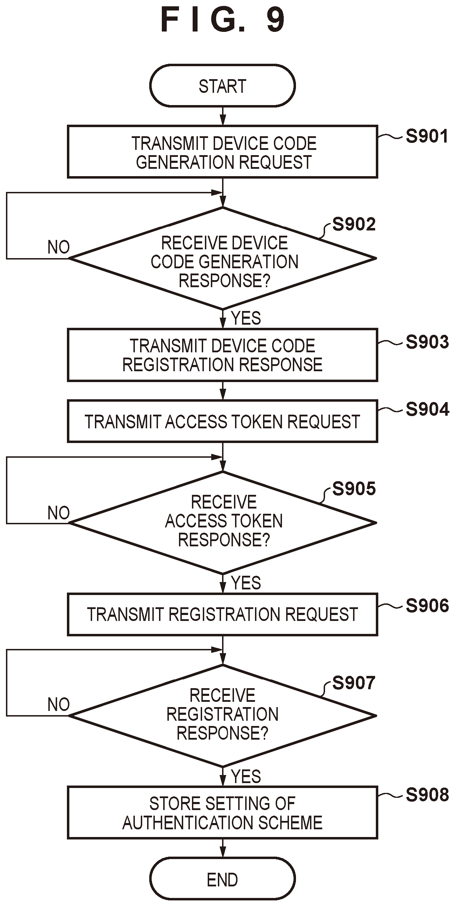

Fig. 9 is a flowchart showing an example of a procedure for initially setting an authentication scheme of the cloud scan service 112 on the MFP 101. Processing according to the procedure of Fig. 9 can be realized on the MFP 101 by the CPU 201 reading out and executing control programs stored in the ROM 202. Note that processing according to the present procedure corresponds to processing of the MFP 101 in the sequence of Fig. 4.

The CPU 201 starts processing according to the present procedure upon receiving a device registration request (step S405) from the user terminal 102 via the communication unit 204.

In step S901, the CPU 201 transmits a device code generation request (step S406) to the cloud registration service 113 via the communication unit 204, and waits for a response to this request. A device code generation response (step S407) transmitted by the cloud registration service 113 includes a device code, a user code, and a URL for verification that are generated by the cloud registration service 113. In step S902, upon receiving the device code generation response from the cloud registration service 113 via the communication unit 204 ("YES" in step S902), the CPU 201 stores the device code in the RAM 203, and causes processing to proceed to step S903.

In step S903, the CPU 201 transmits a device registration response (step S408) as a response to the device registration request from the user terminal 102 to the user terminal 102 via the communication unit 204. The device registration response includes the user code and the URL for verification that were generated by the cloud registration service 113.

After the device registration response has been transmitted, the CPU 201 transmits an access token request (step S411) including the device code generated by the cloud registration service 113 to the cloud registration service 113 via the communication unit 204 in step S904. Thereafter, the CPU 201 waits for a response from the cloud registration service 113 to the access token request (an access token response (step S412)). The access token response includes the access token generated by the cloud registration service 113. In step S905, upon receiving the access token response from the cloud registration service 113 via the communication unit 204 ("YES" in step S905), the CPU 201 stores the access token in the RAM 203, and causes processing to proceed to step S906.

In step S906, the CPU 201 transmits a registration request (step S413) to the cloud registration service 113 via the communication unit 204. The registration request includes information indicating a device name and a device type of the MFP 101. The device name is a device name set for the MFP 101. The device type indicates a device type of the MFP 101. Also, the access token that was generated by the cloud registration service 113 and obtained from the cloud registration service 113 through the access token response is added to an HTTP header of the registration request. After the registration request has been transmitted, the CPU 201 waits for a response to this registration request.

In step S907, upon receiving a registration response (step S414) as a response to the registration request from the cloud registration service 113 via the communication unit 204 ("YES" in step S907), the CPU 201 causes processing to proceed to step S908. The registration response includes a result of registration processing (a result of a determination about whether registration is possible) and setting information of the authentication scheme. In step S908, the CPU 201 stores the setting information of the authentication scheme in the RAM 203, and ends processing according to the present procedure.

### <Processing Procedure (Change of Settings of Authentication Scheme)>

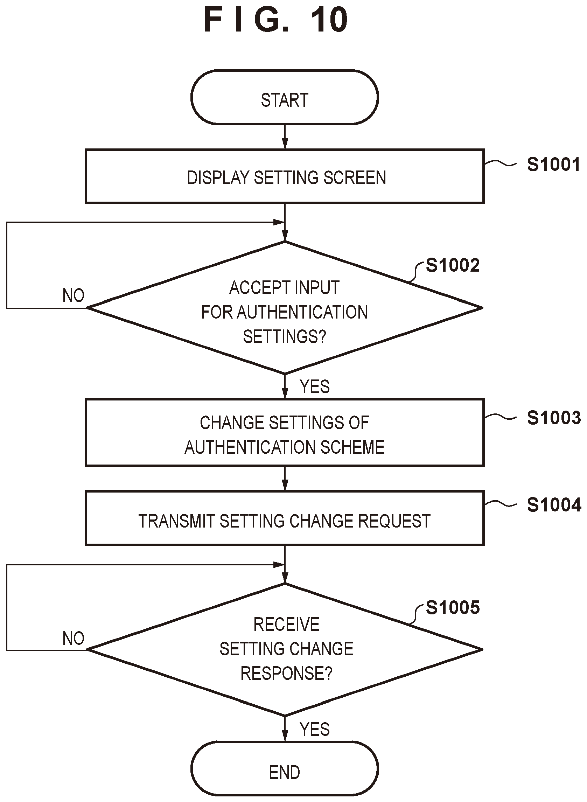

Fig. 10 is a flowchart showing an example of a procedure for switching the authentication scheme of the cloud scan service 112 on the MFP 101. Processing according to the procedure of Fig. 10 can be realized on the MFP 101 by the CPU 201 reading out and executing control programs stored in the ROM 202. Note that processing according to the present procedure corresponds to processing of the MFP 101 in the sequence of Fig. 6.

The CPU 201 starts processing according to the present procedure upon accepting a user operation for switching (changing) the authentication scheme (step S601) via the operation unit 207. Note that, in general, the user who has authority to change settings related to security, such as the authentication scheme, is limited to the administrating user. It is assumed that processing according to the present procedure is executed in response to acceptance of an input made by the administrating user who has authority to change settings related to security.

In step S1001, the CPU 201 displays a setting screen for accepting a user input for settings (a change of settings) of the authentication scheme on the display unit 208. This setting screen is, for example, a UI screen 1120 shown in later-described Fig. 11. Thereafter, in step S1002, the CPU 201 waits for a user input for settings (a change of settings) of the authentication scheme via the operation unit 207. Upon accepting a user input for settings (a change of settings) of the authentication scheme ("YES" in step S1002), the CPU 201 causes processing to proceed to step S1003.

In step S1003, the CPU 201 changes settings of the authentication scheme in accordance with the content of the user input via the setting screen. The CPU 201 changes the settings by writing the changed setting information into the RAM 203. Furthermore, in step S1004, the CPU 201 transmits a setting change request (step S603) to the cloud scan service 112 via the communication unit 204. This setting change request includes the authentication scheme set in step S1002 and the access token unique to the device, which was stored in the RAM 203 at the time of registration (device registration) of the MFP 101 with the cloud scan service 112.

Upon receiving a setting change response (step S605) as a response to the setting change request via the communication unit 204 ("YES" in step S1005), the CPU 201 ends processing according to the present procedure. The setting change response includes information indicating a processing result (a result of the change of settings). Note that in a case where the setting change response has not been received, or in a case where a predetermined timeout period has elapsed without receiving the setting change response, the CPU 201 transmits a setting change request again (step S1004).

### <Examples of UI Screens for Switching Authentication Scheme>

With reference to Fig. 11, a description is now given of examples of UI screens (operation screens) for switching the authentication scheme of the cloud scan service 112 on the MFP 101, which are displayed on the display unit 208 of the MFP 101.

A UI screen 1100 is a home screen of the MFP 101. The UI screen 1100 includes buttons for selecting each function of the MFP 101. A button 1101 of the UI screen 1100 is used to select a menu function. The user can issue an instruction for referring to and changing settings of the MFP 101 by selecting the button 1101.

A UI screen 1110 is displayed on the display unit 208 in a case where the button 1101 has been selected on the UI screen 1100. The UI screen 1110 includes a plurality of list elements corresponding to a plurality of selectable setting items. A list element 1111 corresponds to settings of the cloud scan service. Note that, in general, the user who has authority to change settings related to security, such as the authentication scheme, is limited to the administrating user. Therefore, the CPU 201 may control display of the UI screen 1110 so that the list element 1111 is displayed or the list element 1111 is selectable only in a case where the administrating user who has authority to change settings related to security has logged into the MFP 101.

A UI screen 1120 is displayed on the display unit 208 in a case where the list element 1111 has been selected on the UI screen 1110. The UI screen 1120 is configured so that buttons 1121 and 1122 are exclusively selectable. Upon detecting pressing of an OK button 1123, the CPU 201 stores setting information indicating settings of the authentication scheme corresponding to one of the buttons 1121 and 1122 that was selected ("later authentication" or "authentication on MFP (device)") in the RAM 203.

As described above, the MFP 101 (image reading apparatus) of the present embodiment is configured to be capable of communicating with the cloud scan system 110, which is for uploading scan data to a cloud storage, via the network 100. The MFP 101 (CPU 201) accepts a user operation for changing the authentication scheme of the cloud scan system 110. In accordance with this user operation, the MFP 101 (CPU 201) transmits a request for a change to a predetermined authentication scheme that performs user authentication on the authentication site without requiring the input of authentication information on the MFP 101 (the second authentication scheme), together with the access token that is an approval token for accessing the cloud scan system 110, to the cloud scan system 110. In accordance with settings of the changed authentication scheme, the MFP 101 (CPU 201) transmits scan data, together with the access token and an identifier that can identify authentication registration of the user with the cloud scan system 110, to the cloud scan system 110.

In this way, in the present embodiment, when a user operation of changing settings of the authentication scheme has been performed on the MFP 101, a request for a change of the authentication scheme is transmitted from the MFP 101 to the cloud scan system 110 (cloud scan service 112). As a result, settings of the changed authentication scheme are applied also to the cloud scan system 110 (cloud scan service 112). This can achieve consistency in settings of the authentication scheme between the cloud scan system 110 and the MFP 101. That is to say, it is possible to prevent the occurrence of an inconsistency in settings of the authentication scheme between the image reading apparatus (MFP 101) and the cloud scan service 112 (cloud scan system 110) caused by a change of settings of the authentication scheme. Also, it is possible to prevent a reduction in security attributed to such an inconsistency.

Furthermore, in a case where the first authentication scheme ("authentication on MFP") has been set, if the MFP 101 (CPU 201) accepts a user operation for temporarily changing the authentication scheme to be used with respect to a scan job to be executed from the first authentication scheme to the second authentication scheme ("later authentication"), it changes settings of the authentication scheme (temporarily) in accordance with this user operation. Thereafter, upon completion of the execution of the scan job, the MFP 101 (CPU 201) restores settings of the authentication scheme from the second authentication scheme to the first authentication scheme. This makes it possible to alleviate anxiety that the user feels due to application of the first authentication scheme ("authentication on MFP") to the MFP 101 (anxiety about the storage of input authentication information in the MFP 101).

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image reading apparatus (101) including generation means (209) for reading an image on a sheet to generate scan data, the image reading apparatus comprising:
acceptance means (201, 207) for accepting a user operation for designating an authentication scheme to be used when scan data is uploaded to a storage service via a cloud scan system (110);
request means (201, 204) for transmitting a request designating a predetermined authentication scheme to the cloud scan system in accordance with the user operation, the predetermined authentication scheme being an authentication scheme in which the cloud scan system executes processing for user authentication with respect to an account that is identified at a time of reception of the scan data from the image reading apparatus, in the cloud scan system; and
transmission means (201, 204) for transmitting, to the cloud scan system, the scan data, an access token already issued with respect to the image reading apparatus, and an identifier capable of identifying the account in the cloud scan system, in accordance with a setting of the predetermined authentication scheme.

2. The image reading apparatus according to claim 1, wherein
in a case where another authentication scheme different from the predetermined authentication scheme is set in the image reading apparatus, after user authentication is executed in the image reading apparatus, the transmission means transmits the scan data, the access token, and user information of an authenticated user to the cloud scan system in accordance with a setting of the other authentication scheme.

3. The image reading apparatus according to claim 2, wherein
in a case where the other authentication scheme is set in the image reading apparatus, based on a user operation for temporarily changing, to the predetermined authentication scheme, an authentication scheme to be applied to a scan job to be executed, the transmission means transmits the scan data, the access token, and the identifier to the cloud scan system with respect to the scan job.

4. The image reading apparatus according to any one of claims 1 to 3, further comprising:
registration request means for transmitting, to the cloud scan system, a registration request for device registration of the image reading apparatus with the cloud scan system; and
reception means for receiving the access token from the cloud scan system as a part of a response to the registration request.

5. The image reading apparatus according to any one of claims 1 to 4, wherein
based on success in user authentication with respect to the account identified by the identifier, the user authentication being executed after transmission of the scan data to the cloud scan system, the scan data is transferred from the cloud scan system to a storage service that is identified based on the identifier.

6. The image reading apparatus according to any one of claims 1 to 5, wherein
for user authentication with respect to the account identified by the identifier, the cloud scan system provides a message for the user authentication to an E-mail address that is identified based on the identifier.

7. The image reading apparatus according to any one of claims 1 to 6, wherein
the identifier is a UserPrincipalName (UPN).

8. The image reading apparatus according to any one of claims 1 to 7, wherein
the image reading apparatus is a multifunction peripheral that further comprises print means for printing an image on a sheet.

9. The image reading apparatus according to any one of claims 1 to 8, wherein
the request means includes the access token in the request that designates the predetermined authentication scheme and transmits the request to the cloud scan system.

10. A control method for an image reading apparatus (101) including generation means (209) for reading an image on a sheet to generate scan data, the control method comprising:
accepting (S801) a user operation for designating an authentication scheme to be used when scan data is uploaded to a storage service via a cloud scan system;
transmitting (S505, S603, S1004) a request designating a predetermined authentication scheme to the cloud scan system in accordance with the user operation, the predetermined authentication scheme being an authentication scheme in which the cloud scan system executes processing for user authentication with respect to an account that is identified at a time of reception of the scan data from the image reading apparatus, in the cloud scan system; and
transmitting (S505), to the cloud scan system, the scan data, an access token already issued with respect to the image reading apparatus, and an identifier capable of identifying the account in the cloud scan system, in accordance with a setting of the predetermined authentication scheme.

11. A computer program comprising instructions which, when the program is executed by a computer of an image reading apparatus, cause the computer to carry out a control method according to claim 10.

12. A system including an image reading apparatus (101) and a cloud scan system (110), the image reading apparatus including generation means (209) for reading an image on a sheet to generate scan data, the system comprising:
acceptance means for accepting a user operation for designating an authentication scheme to be used when scan data is uploaded to a storage service via the cloud scan system, in the image reading apparatus;
request means for transmitting a request designating a predetermined authentication scheme to the cloud scan system in accordance with the user operation in the image reading apparatus, the predetermined authentication scheme being an authentication scheme in which the cloud scan system executes processing for user authentication with respect to an account that is identified at a time of reception of the scan data from the image reading apparatus, in the cloud scan system;
management means for managing a setting of the predetermined authentication scheme as a setting of the image reading apparatus based on the request received from the image reading apparatus, in the cloud scan system; and
transmission means for transmitting, to the cloud scan system, the scan data, an access token already issued with respect to the image reading apparatus, and an identifier capable of identifying the account in the cloud scan system, in accordance with the setting of the predetermined authentication scheme, in the image reading apparatus.
